# EUROPEAN PATENT APPLICATION

(11) **EP 4 583 231 A1**
(43) Date of publication of application: **09.07.2025**
(21) Application number: 23917119.2
(22) Date of filing: 26.10.2023
(51) Int. Cl.: H01M 10/0567, H01M 10/056, H01M 10/054

(54) **ELECTROLYTE FOR SODIUM SECONDARY BATTERY, SODIUM SECONDARY BATTERY, AND ELECTRIC DEVICE**

(30) Priority: 16.01.2023 CN 202310075590
(71) Applicant: Contemporary Amperex Technology (Hong Kong) Limited, Central (HK)
(72) Inventor: LI, Xiaolong, Ningde, Fujian 352100 (CN); GUO, Bingkun, Ningde, Fujian 352100 (CN); ZHANG, Xinxin, Ningde, Fujian 352100 (CN); CHEN, Shigang, Ningde, Fujian 352100 (CN); LIU, Ben, Ningde, Fujian 352100 (CN); YAO, Shikang, Ningde, Fujian 352100 (CN); LIN, Wenguang, Ningde, Fujian 352100 (CN); ZHOU, Qicheng, Ningde, Fujian 352100 (CN); LAN, Jiadian, Ningde, Fujian 352100 (CN)
(74) Representative: Jacob, Reuben Ellis
(86) International application number: PCT/CN2023/126797
(87) International publication number: WO 2024/152651

(57) **Abstract**

The present application provides an electrolyte for a sodium secondary battery, a sodium secondary battery, and an electric device. The electrolyte for a sodium secondary battery comprises a diluent, and the diluent comprises an alkyl alkoxy silane compound. According to the present application, adding a diluent comprising an alkyl alkoxy silane compound into an electrolyte can reduce gas production of batteries at high temperatures, and improve the safety of the batteries.

## Description

### CROSS-REFERENCE TO RELATED APPLICATIONS

This application refers to Chinese Patent Application 202310075590.3, filed on January 16, 2023 and entitled "ELECTROLYTE FOR SODIUM SECONDARY BATTERY, SODIUM SECONDARY BATTERY, AND ELECTRIC DEVICE".

### TECHNICAL FIELD

This application relates to the field of sodium secondary battery technologies, and in particular, to an electrolyte for a sodium secondary battery, a sodium secondary battery, and an electric device.

### BACKGROUND

With the development of society, various issues such as energy shortages and environmental pollution have become increasingly prominent. In order to achieve the goal of a sustainable society, researchers have gradually turned their attention to secondary batteries. Secondary batteries are the preferred energy storage systems for portable electronic devices and electric vehicles; however, their performance significantly degrades, and safety risks become severe in high-temperature environments.

As a transfer medium between the positive and negative electrodes in secondary batteries, the performance of the electrolyte directly affects the high-temperature performance of the battery. In the existing technology, electrolytes tend to decompose easily and react with the negative electrode under high-temperature environment, leading to severe gas generation. Therefore, developing an electrolyte with high stability at high temperatures to improve the high-temperature performance of the battery has become an urgent issue for persons skilled in the art.

### SUMMARY

This application is conducted in view of the foregoing issues, aiming to provide an electrolyte for sodium secondary batteries to reduce high-temperature gas generation and expand the applicable environment of the battery.

According to first aspect of this application, an electrolyte for a sodium secondary battery is provided, and the electrolyte includes a diluent, where the diluent includes an alkyl alkoxy silane compound.

The carbon-oxygen bond in the alkyl alkoxy silane compound possesses strong bond energy, endowing the alkyl alkoxy silane compound with excellent chemical stability. This can enhance the electrochemical window of the electrolyte, providing it with superior electrochemical stability. Additionally, as a diluent, the alkyl alkoxy silane compound can form a protective layer around the solvation structure, reducing direct contact between the solvent and the negative electrode and positive electrode. This helps to suppress gas generation during high-temperature cycling of sodium secondary batteries, thereby improving the safety performance of the battery under high-temperature environment.

In any embodiment, the diluent includes one or more of compounds represented by formula I, formula II, formula III, or formula IV: 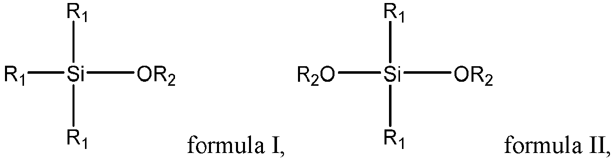 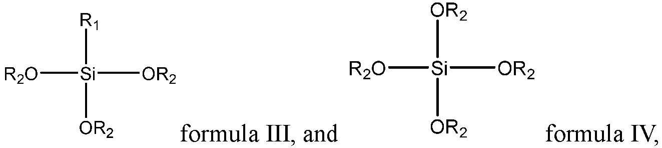 where
R₁ is selected from C₁-C₁₀ alkyl groups, and R₂ is selected from C₁-C₆ alkyl groups.

In any embodiment, the diluent includes one or more selected from methyltrimethoxysilane, dimethyldimethoxysilane, trimethylmethoxysilane, methyltriethoxysilane, dimethyldiethoxysilane, tetraethoxysilane, tetramethoxysilane, tetrapropoxysilane, ethyltrimethoxysilane, n-propyltrimethoxysilane, n-propyltriethoxysilane, isobutyltrimethoxysilane, isobutyltriethoxysilane, n-hexyltrimethoxysilane, n-hexyltriethoxysilane, n-octyltriethoxysilane, and n-decyltrimethoxysilane, optionally one or more of methyltrimethoxysilane, methyltriethoxysilane, and tetraethoxysilane.

In any embodiment, the electrolyte further includes a solvent, where a volume ratio Y of the diluent to the solvent is in a range of 0.5 - 7, optionally 1 - 5.

When the volume ratio of the diluent to the solvent is within an appropriate range, the high-temperature cycling performance of the battery can be improved, the high-temperature gas generation phenomenon of the battery can be alleviated, and the cycling performance and safety performance of the battery at high temperatures can be improved.

In any embodiment, the solvent includes an ether solvent.

The ether solvent enables the battery to have excellent room-temperature cycling performance and high-temperature cycling performance, and low high-temperature gas generation.

In any embodiment, the solvent includes one or more of dimethoxyethane, diethylene glycol dimethyl ether, ethylene glycol diethyl ether, triethylene glycol dimethyl ether, tetraethylene glycol dimethyl ether, and 1,3-dioxolane, optionally one or more of dimethoxyethane, diethylene glycol dimethyl ether, ethylene glycol diethyl ether, and tetraethylene glycol dimethyl ether.

In any embodiment, the electrolyte includes a sodium salt,
and the electrolyte satisfies the following relationship: 5/(1 + Y) ≤ X ≤ 50/(1 + Y), where
X% is a mass percentage of the sodium salt based on a total mass of the electrolyte; and Y is the volume ratio of the diluent to the solvent.

When the mass percentage X% of the sodium salt based on the total mass of the electrolyte and the volume ratio Y of the diluent to the solvent are controlled to satisfy 5/(1 + Y) ≤ X ≤ 50/(1 + Y), the room-temperature cycling performance of the battery can be improved, and the electrochemical performance of the battery can be enhanced.

In any embodiment, the sodium salt includes one or more of sodium perchlorate, sodium tetrafluoroborate, sodium hexafluorophosphate, sodium hexafluoroarsenate, sodium trifluoroacetate, sodium tetraphenylborate, sodium trifluoromethanesulfonate, sodium bis(fluorosulfonyl)imide, and sodium bis(trifluoromethylsulfonyl)imide.

According to a second aspect of this application, a sodium secondary battery is provided, where the sodium secondary battery includes the electrolyte of the first aspect.

In any embodiment, the sodium secondary battery includes a negative electrode plate, the negative electrode plate including a negative electrode current collector and a primer coating formed on at least one side of the negative electrode current collector.

The conductive primer coating has the characteristic of low metal nucleation potential, which can effectively improve the deposition/dissolution performance of the metal. It can also mitigate the large volume changes of the battery cell brought about by the metal deposition/dissolution process, stabilizing the battery cell structure. This can improve the room-temperature cycling performance and high-temperature cycling performance of the battery, alleviate the high-temperature gas generation phenomenon of the battery, and improve the electrochemical performance and safety performance of the battery.

In any embodiment, a surface density of the primer coating is 5 g/m² - 50 g/m².

An appropriate range of primer coating surface density can optimize the metal deposition effect, enhance the high-temperature cycling performance and room-temperature cycling performance of the battery, and alleviate the high-temperature gas generation phenomenon of the battery. At the same time, an appropriate range of the primer coating surface density can increase the energy density of the battery, satisfying the usage requirements of the battery.

In any embodiment, the primer coating includes one or more of carbon coating, alloy coating, and metal oxide coating, optionally carbon coating.

In any embodiment, the primer coating contains one or more of super conductive carbon black, Ketjen black, acetylene black, carbon nanotubes, and graphene.

In any embodiment, the sodium secondary battery is a sodium metal battery with no negative electrode.

When the sodium secondary battery is a sodium metal battery with no negative electrode, the room-temperature cycling performance and high-temperature cycling performance of the battery can be improved, the high-temperature gas generation phenomenon of the battery can be alleviated, and the electrochemical performance and safety performance of the battery can be improved.

According to a third aspect of this application, a battery module is provided, including the sodium secondary battery of the second aspect.

According to a fourth aspect of this application, a battery pack is provided, including the sodium secondary battery of the second aspect or the battery module of the third aspect.

According to a fifth aspect of this application, an electric device is provided, including at least one of the sodium secondary battery of the second aspect, the battery module of the third aspect, or the battery pack of the fourth aspect.

### BRIEF DESCRIPTION OF DRAWINGS

FIG. 1 is a schematic diagram of a sodium secondary battery according to an embodiment of this application;
FIG. 2 is an exploded view of the sodium secondary battery according to the embodiment of this application shown in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application shown in FIG. 4; and
FIG. 6 is a schematic diagram of an electric device using a sodium secondary battery as a power source according to an embodiment of this application.

### Reference signs:

1. battery pack; 2. upper box body; 3. lower box body; 4. battery module; 5. sodium secondary battery; 51. housing; 52. electrode assembly; and 53. cover plate.

### DESCRIPTION OF EMBODIMENTS

The following specifically discloses in detail embodiments of the secondary battery, battery module, battery pack, and electric device of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60 - 120 and 80 - 110 are provided for a specific parameter, it is understood that ranges of 60 - 110 and 80 - 120 can also be envisioned. In addition, if low limit values of a range are given as 1 and 2, and upper limit values of the range are given as 3, 4, and 5, the following ranges can all be envisioned: 1 - 3, 1 - 4, 1 - 5, 2 - 3, 2 - 4, and 2 - 5. In this application, unless otherwise stated, a value range of "a - b" is a short representation of any combination of real numbers between a and b, where both a and b are real numbers. For example, a value range of "0 - 5" means that all real numbers in the range of "0 - 5" are listed herein, and "0 - 5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

When secondary batteries are used or stored at high temperatures, the reactivity between the positive and negative electrodes and the electrolyte increases, leading to a significant rise in the heat released by these reactions. This results in the generation of a large amount of gas, causing the battery to be prone to volume swelling. In severe cases, this can lead to an internal short circuit within the battery, severely compromising its safety performance.

### [Electrolyte for sodium secondary battery]

This application provides an electrolyte for a sodium secondary battery, the electrolyte includes a diluent, where the diluent includes an alkyl alkoxy silane compound.

In this document, the term "sodium secondary battery" refers to a secondary battery that uses sodium ions as charge carriers. The negative electrode active material of the sodium secondary battery includes carbon-based material, titanium-based material, alloy material, layered transition metal oxide, layered transition metal selenide, organic material, or metallic sodium. A sodium secondary battery that uses metallic sodium as the negative electrode active material is called a sodium metal battery.

In some embodiments, the negative electrode active material of the sodium secondary battery includes one or more of graphite carbon material, amorphous carbon material, and nano-carbon material.

In some embodiments, the negative electrode active material of the sodium secondary battery is hard carbon.

In some embodiments, the negative electrode active material of the sodium secondary battery is metallic sodium.

In this document, the term "sodium metal battery with no negative electrode" refers to a sodium metal battery where a current collector is used as the negative electrode during assembly, and sodium ions are deposited onto the current collector to form a sodium metal negative electrode during charging.

In this document, the term "electrolyte" refers to a medium for ion transport in the sodium secondary battery, including liquid electrolyte, solid electrolyte, or quasi-solid electrolyte.

In this document, the term "diluent" refers to a component in which the electrolyte salt is insoluble or poorly soluble. There is no significant coordination or association between the molecules of the diluent and the cations of the electrolyte salt, and the diluent does not disrupt the solvation structure.

The solvation structure refers to the aggregation formed when solvent molecules in the electrolyte bind much more strongly to cations than to anions. After sodium salt dissolves in the solvent, the solvent molecules gather around the sodium ions, and the aggregation formed by the sodium ions and the solvent is known as the solvation structure.

In this document, the term "alkyl alkoxy silane compound" refers to a compound in which at least one of the four bonds connected to the silicon atom is bonded to an alkoxy group, and the remaining bonds are bonded to alkyl groups. The alkoxy group consists of an alkyl group and an oxygen atom.

In this document, the term "electrochemical window" refers to a difference between an oxidation potential and a reduction potential of the electrolyte. A wider electrochemical window indicates stronger electrochemical stability of the electrolyte.

When an alkyl alkoxy silane compound is used as the diluent, on the one hand, the carbon-oxygen bond in the alkyl alkoxy silane compound has strong bond energy, providing the alkyl alkoxy silane compound with excellent chemical stability, which can enhance the electrochemical window of the electrolyte. On the other hand, due to the low solubility of sodium salts in the alkyl alkoxy silane compound, the alkyl alkoxy silane compound does not directly participate in the solvation structure of sodium ions, thereby not affecting the film-forming properties on the surfaces of the positive and negative electrodes in sodium secondary batteries. Additionally, the alkyl alkoxy silane compound can form a protective layer around the solvation structure, reducing direct contact between the solvent and the positive and negative electrodes. This helps to suppress gas generation during high-temperature cycling of sodium secondary batteries, thereby improving the safety performance of the battery at high temperatures. Furthermore, adding the alkyl alkoxy silane compound as a diluent can reduce the viscosity of the electrolyte without disrupting the solvation structure, increasing the ionic conductivity of the electrolyte, which is beneficial for the electrochemical performance of the battery.

In some embodiments, the diluent includes one or more of compounds represented by formula **I,** formula **II,** formula **III,** or formula IV: 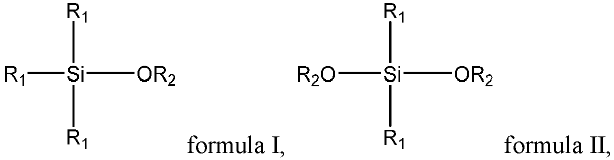 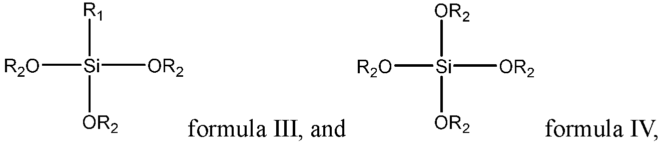 where
R₁ is selected from C₁-C₁₀ alkyl groups, and R₂ is selected from C₁-C₆ alkyl groups.

In this document, the term "C₁-C₁₀ alkyl group" refers to a straight-chain or branched hydrocarbon chain group consisting only of carbon and hydrogen atoms, where the group has no unsaturation, has one to ten carbon atoms, and is attached to the rest of the molecule through a single bond.

In this document, the term "C₁-C₆ alkyl group" refers to a straight-chain or branched hydrocarbon chain group consisting only of carbon and hydrogen atoms, where the group has no unsaturation, has one to six carbon atoms, and is attached to the rest of the molecule through a single bond.

In some embodiments, the diluent includes one or more of methyltrimethoxysilane, dimethyldimethoxysilane, trimethylmethoxysilane, methyltriethoxysilane, dimethyldiethoxysilane, tetraethoxysilane, tetramethoxysilane, tetrapropoxysilane, ethyltrimethoxysilane, n-propyltrimethoxysilane, n-propyltriethoxysilane, isobutyltrimethoxysilane, isobutyltriethoxysilane, n-hexyltrimethoxysilane, n-hexyltriethoxysilane, n-octyltriethoxysilane, and n-decyltrimethoxysilane.

In some embodiments, the diluent includes one or more of methyltrimethoxysilane, methyltriethoxysilane, and tetraethoxysilane.

In some embodiments, the electrolyte further includes a solvent.

In some embodiments, the solvent includes an ether solvent.

In some embodiments, the solvent includes one or more of dimethoxyethane, diethylene glycol dimethyl ether, ethylene glycol diethyl ether, triethylene glycol dimethyl ether, tetraethylene glycol dimethyl ether, and 1,3-dioxolane.

In some embodiments, the solvent includes one or more of dimethoxyethane, diethylene glycol dimethyl ether, ethylene glycol diethyl ether, and tetraethylene glycol dimethyl ether.

The molecules of the ether solvent can construct a stable electrode/electrolyte interface on a surface of the negative electrode, forming a stable SEI. This reduces electrochemical polarization and improves the cycling performance of the battery. Additionally, an ether solvent and an alkyl alkoxy silane compound have the same carbon-oxygen bond, ensuring the mutual solubility between the ether solvent and the alkyl alkoxy silane compound. This facilitates the formation of a protective layer by the alkyl alkoxy silane compound around the solvation structure, thereby reducing gas generation in the battery.

In summary, the ether solvent enables the battery to have excellent room-temperature cycling performance and high-temperature cycling performance, and low high-temperature gas generation.

In some embodiments, a volume ratio Y of the diluent to the solvent is in a range of 0.5 - 7. In some embodiments, the volume ratio Y of the diluent to the solvent may optionally be any one of the following ranges: 0.5 - 1, 0.5 - 1.5, 0.5 - 2, 0.5 - 2.5, 0.5 - 3, 0.5 - 3.5, 0.5 - 4, 0.5 - 4.5, 0.5 - 5, 0.5 - 5.5, 0.5 - 6, 0.5 - 6.5, 0.5 - 7, 1 - 1.5, 1 - 2, 1 - 2.5, 1 - 3, 1 - 3.5, 1 - 4, 1 - 4.5, 1 - 5, 1 - 5.5, 1 - 6, 1 - 6.5, 1 - 7, 1.5 - 2, 1.5 - 2.5, 1.5 - 3, 1.5 - 3.5, 1.5 - 4, 1.5 - 4.5, 1.5 - 5, 1.5 - 5.5, 1.5 - 6, 1.5 - 6.5, 1.5 - 7, 2 - 2.5, 2 - 3, 2 - 3.5, 2 - 4, 2 - 4.5, 2 - 5, 2 - 5.5, 2 - 6, 2 - 6.5, 2 - 7, 2.5 - 3, 2.5 - 3.5, 2.5 - 4, 2.5 - 4.5, 2.5 - 5, 2.5 - 5.5, 2.5 - 6, 2.5 - 6.5, 2.5 - 7, 3 - 3.5, 3 - 4, 3 - 4.5, 3 - 5, 3 - 5.5, 3 - 6, 3 - 6.5, 3 - 7, 3.5 - 4, 3.5 - 4.5, 3.5 - 5, 3.5 - 5.5, 3.5 - 6, 3.5 - 6.5, 3.5 - 7, 4 - 4.5, 4 - 5, 4 - 5.5, 4 - 6, 4 - 6.5, 4 - 7, 4.5 - 5, 4.5 - 5.5, 4.5 - 6, 4.5 - 6.5, 4.5 - 7, 5 - 5.5, 5 - 6, 5 - 6.5, 5 - 7, 5.5 - 6, 5.5 - 6.5, 5.5 - 7, 6 - 6.5, 6 - 7, and 6.5 - 7.

When the volume ratio of the diluent to the solvent is within an appropriate range, the high-temperature cycling performance of the battery can be improved, the high-temperature gas generation phenomenon of the battery can be alleviated, and the cycling performance and safety performance of the battery at high temperatures can be improved.

In some embodiments, a volume ratio Y of the diluent to the solvent is in a range of 1 - 5. In some embodiments, the volume ratio Y of the diluent to the solvent may optionally be any one of the following ranges: 1 - 1.5, 1 - 2, 1 - 2.5, 1 - 3, 1 - 3.5, 1 - 4, 1 - 4.5, 1 - 5, 1.5 - 2, 1.5 - 2.5, 1.5 - 3, 1.5 - 3.5, 1.5 - 4, 1.5 - 4.5, 1.5 - 5, 2 - 2.5, 2 - 3, 2 - 3.5, 2 - 4, 2 - 4.5, 2 - 5, 2.5 - 3, 2.5 - 3.5, 2.5 - 4, 2.5 - 4.5, 2.5 - 5, 3 - 3.5, 3 - 4, 3 - 4.5, 3 - 5, 3.5 - 4, 3.5 - 4.5, 3.5 - 5, 3.5 - 5.5, 3.5 - 6, 4 - 4.5, 4 - 5, 4 - 5.5, 4 - 6, 4.5 - 5, 4.5 - 5.5, and 4.5 - 6.

When the volume ratio of the diluent to the solvent is within an appropriate range, the high-temperature cycling performance of the battery can be further improved, the high-temperature gas generation phenomenon of the battery can be alleviated, and the usable temperature range of the battery can be extended.

In some embodiments, the electrolyte includes a sodium salt,
and the electrolyte satisfies the following relationship: 5/(1 + Y) ≤ X ≤ 50/(1 + Y), where
X% is a mass percentage of the sodium salt based on a total mass of the electrolyte; and Y is the volume ratio of the diluent to the solvent.

In some embodiments, the electrolyte includes the sodium salt, and the electrolyte satisfies any one of the following relationships: 5/(1 + Y) ≤ X ≤ 10/(1 + Y), 5/(1 + Y) ≤ X ≤ 15/(1 + Y), 5/(1 + Y) ≤ X ≤ 20/(1 + Y), 5/(1 + Y) ≤ X ≤ 25/(1 + Y), 5/(1 + Y) ≤ X ≤ 30/(1 + Y), 5/(1 + Y) ≤ X ≤ 35/(1 + Y), 5/(1 + Y) ≤ X ≤ 40/(1 + Y), 5/(1 + Y) ≤ X ≤ 45/(1 + Y), 5/(1 + Y) ≤ X ≤ 50/(1 + Y), 10/(1 + Y) ≤ X ≤ 15/(1 + Y), 10/(1 + Y) ≤ X ≤ 20/(1 + Y), 10/(1 + Y) ≤ X ≤ 25/(1 + Y), 10/(1 + Y) ≤ X ≤ 30/(1 + Y), 10/(1 + Y) ≤ X ≤ 35/(1 + Y), 10/(1 + Y) ≤ X ≤ 40/(1 + Y), 10/(1 + Y) ≤ X ≤ 45/(1 + Y), 10/(1 + Y) ≤ X ≤ 50/(1 + Y), 15/(1 + Y) ≤ X ≤ 20/(1 + Y), 15/(1 + Y) ≤ X ≤ 25/(1 + Y), 15/(1 + Y) ≤ X ≤ 30/(1 + Y), 15/(1 + Y) ≤ X ≤ 35/(1 + Y), 15/(1 + Y) ≤ X ≤ 40/(1 + Y), 15/(1 + Y) ≤ X ≤ 45/(1 + Y), 15/(1 + Y) ≤ X ≤ 50/(1 + Y), 20/(1 + Y) ≤ X ≤ 25/(1 + Y), 20/(1 + Y) ≤ X ≤ 30/(1 + Y), 20/(1 + Y) ≤ X ≤ 35/(1 + Y), 20/(1 + Y) ≤ X ≤ 40/(1 + Y), 20/(1 + Y) ≤ X ≤ 45/(1 + Y), 20/(1 + Y) ≤ X ≤ 50/(1 + Y), 25/(1 + Y) ≤ X ≤ 30/(1 + Y), 25/(1 + Y) ≤ X ≤ 35/(1 + Y), 25/(1 + Y) ≤ X ≤ 40/(1 + Y), 25/(1 + Y) ≤ X ≤ 45/(1 + Y), 25/(1 + Y) ≤ X ≤ 50/(1 + Y), 30/(1 + Y) ≤ X ≤ 35/(1 + Y), 30/(1 + Y) ≤ X ≤ 40/(1 + Y), 30/(1 + Y) ≤ X ≤ 45/(1 + Y), 30/(1 + Y) ≤ X ≤ 50/(1 + Y), 35/(1 + Y) ≤ X ≤ 40/(1 + Y), 35/(1 + Y) ≤ X ≤ 45/(1 + Y), 35/(1 + Y) ≤ X ≤ 50/(1 + Y), 40/(1 + Y) ≤ X ≤ 45/(1 + Y), 40/(1 + Y) ≤ X ≤ 50/(1 + Y), and 45/(1 + Y) ≤ X ≤ 50/(1 + Y).

The sodium salt and solvent participate in forming the solvation structure of sodium ions, while the diluent forms a protective layer around the solvation structure. To ensure the optimal ratio between the solvation structure and the protective layer formed by the diluent, an effective cooperation between the sodium salt, the solvent, and the diluent is required.

The applicant unexpectedly discovered that when the mass percentage X% of the sodium salt based on the total mass of the electrolyte and the volume ratio Y of the diluent to the solvent are controlled to satisfy 5/(1 + Y) ≤ X ≤ 50/(1 + Y), an optimal ratio between the diluent and the solvation structure can be achieved. This allows the diluent to form a protective layer around the solvation structure, enhancing the room-temperature cycling performance of the battery and improving the electrochemical performance of the battery.

**In** some embodiments, the sodium salt includes one or more of sodium perchlorate, sodium tetrafluoroborate, sodium hexafluorophosphate, sodium hexafluoroarsenate, sodium trifluoroacetate, sodium tetraphenylborate, sodium trifluoromethanesulfonate, sodium bis(fluorosulfonyl)imide, and sodium bis(trifluoromethylsulfonyl)imide.

**In** some embodiments, a sodium secondary battery is provided, where the sodium secondary battery includes the electrolyte in any embodiment.

In some embodiments, the sodium secondary battery includes a negative electrode plate, the negative electrode plate including a negative electrode current collector and a primer coating formed on at least one side of the negative electrode current collector.

In this document, the term "primer coating on at least one side of the negative electrode current collector" refers to a primer coating applied to one or two sides of the current collector. The primer coating may be in direct contact with the current collector, meaning there are no other structures between the current collector and the primer coating, or the primer coating may not be in direct contact with the current collector, meaning there are other structures between the current collector and the primer coating.

The primer coating has the characteristic of low metal nucleation potential, which can effectively improve the deposition/dissolution performance of the sodium metal. It can also mitigate the large volume changes of the battery cell brought about by the sodium metal deposition/dissolution process, stabilizing the battery cell structure. This can improve the room-temperature cycling performance and high-temperature cycling performance of the battery, alleviate the high-temperature gas generation phenomenon of the battery, and improve the electrochemical performance and safety performance of the battery.

In some embodiments, the surface density of the primer coating is 5 g/m² - 50 g/m². In some embodiments, the surface density of the primer coating may optionally be any one of 5 g/m² - 10 g/m², 5 g/m² - 20 g/m², 5 g/m² - 30 g/m², 5 g/m² - 40 g/m², 5 g/m² - 50 g/m², 10 g/m² - 20 g/m², 10 g/m² - 30 g/m², 10 g/m² - 40 g/m², 10 g/m² - 50 g/m², 20 g/m² - 30 g/m², 20 g/m² - 40 g/m², 20 g/m² - 50 g/m², 30 g/m² - 40 g/m², 30 g/m² - 50 g/m², and 40 g/m² - 50 g/m².

An appropriate range of primer coating surface density can optimize the metal deposition effect, enhance the high-temperature cycling performance and room-temperature cycling performance of the battery, and alleviate the high-temperature gas generation phenomenon of the battery. At the same time, an appropriate range of the primer coating surface density can increase the energy density of the battery, satisfying the usage requirements of the battery.

In some embodiments, the primer coating includes one or more of carbon coating, alloy coating, and metal oxide coating.

In some embodiments, the primer coating includes carbon coating.

In some embodiments, the primer coating contains one or more of super conductive carbon black, Ketjen black, acetylene black, carbon nanotubes, and graphene.

In some embodiments, the primer coating includes a binder, where the binder includes any one of polyvinylidene fluoride, sodium carboxymethyl cellulose, styrene-butadiene rubber, sodium alginate, lithium/sodium polyacrylate, polytetrafluoroethylene, polyimide, and polyurethane.

In some embodiments, the primer coating is a metallic coating, where the metal has a body-centered cubic structure. The metal includes any one of α-Fe, V, Nb, Cr, Mo, Ta, and W.

In some embodiments, the primer coating is an alloy coating, where the alloy includes an alloy composed of any one or more metals of Au, Ag, Sn, and Sb.

In some embodiments, the primer coating is a metal oxide coating, where the oxide includes at least one of copper oxide and aluminum oxide.

In some embodiments, the primer coating is a conductive polymer coating, where the conductive polymer includes any one of polyaniline, polythiophene, polypyrrole, and polyphenylacetylene.

In some embodiments, the primer coating is a conductive ceramic coating, where the conductive ceramic material includes at least one of TiB₂, TiC, and B₄C₃.

In some embodiments, the primer coating is a conductive carbon coating, where the conductive carbon includes at least one of conductive carbon black, graphite, carbon fibers, single-walled carbon nanotubes, multi-walled carbon nanotubes, graphene, and fullerene.

In some embodiments, the sodium secondary battery is a sodium metal battery with no negative electrode.

In some embodiments, the sodium secondary battery is a sodium metal battery with no negative electrode. The sodium metal battery with no negative electrode does not use a negative electrode active material. Instead, it solely uses a negative electrode current collector as the negative electrode. During the initial charging process, sodium deposition occurs on the negative electrode, and during discharge, sodium returns to the positive electrode, realizing a charge and discharge cycle. Due to the absence of a negative electrode material and the use of only a negative electrode current collector, a sodium metal battery with no negative electrode can effectively overcome the drawbacks of a sodium metal battery and achieve a higher energy density compared to a battery with a metal sodium negative electrode.

When the sodium secondary battery is a sodium metal battery with no negative electrode, the room-temperature cycling performance and high-temperature cycling performance of the battery can be improved, the high-temperature gas generation phenomenon of the battery can be alleviated, and the electrochemical performance and safety performance of the battery in high temperatures can be improved.

In some embodiments, a CB value of the sodium metal battery with no negative electrode is less than or equal to 0.1.

The CB value is the unit area capacity of the negative electrode plate in the sodium secondary battery divided by the unit area capacity of the positive electrode plate in the sodium secondary battery. Since a sodium metal battery with no negative electrode does not contain a negative electrode active material, the unit area capacity of the negative electrode plate is relatively small, and the CB value of the secondary battery is less than or equal to 0.1.

In some embodiments, the negative electrode current collector used in the negative electrode plate includes at least one of metal foil current collector, metal foam current collector, metal mesh current collector, carbon felt current collector, carbon cloth current collector, and carbon paper current collector. Sodium ions do not form an alloy with aluminum. Based on cost reduction and weight reduction considerations, a sodium secondary battery preferably uses an aluminum-based current collector. The aluminum-based current collector is any one of aluminum foil, aluminum alloy foil, and aluminum-based composite current collector. The aluminum-based composite current collector includes a polymer base film and aluminum foil and/or aluminum alloy foil formed on two sides of the polymer base film. Specifically, the aluminum-based composite current collector has a "sandwich" structure, with the polymer base film in the middle, and aluminum foil on two sides, or aluminum alloy foil on two sides. It can also have aluminum foil on one side of the polymer base film and aluminum alloy foil on another side. The polymer base film is any one of polyamide, polyethylene terephthalate, polyimide, polyethylene, polypropylene, polystyrene, polyvinyl chloride, acrylonitrile-butadiene-styrene copolymer, polybutylene terephthalate, poly(p-phenylene terephthalamide), polybutylene, polyoxymethylene, epoxy resin, phenolic resin, polytetrafluoroethylene, polyvinylidene fluoride, silicon rubber, and polycarbonate.

### [Positive electrode plate]

In some embodiments, the positive electrode plate includes a positive electrode current collector and a positive electrode active material layer formed on at least part of a surface of the positive current collector, where the positive electrode active material layer includes a positive electrode active material, and the positive electrode active material may include at least one of a layered transition metal oxide, a polyanionic compound, and a Prussian blue compound.

The transition metal in the layered transition metal oxide may be at least one of Mn, Fe, Ni, Co, Cr, Cu, Ti, Zn, V, Zr, and Ce. Optionally, the layered transition metal oxide is, for example, NaxMO₂, where M is one or more of Ti, V, Mn, Co, Ni, Fe, Cr, and Cu, and 0 < x ≤ 1.

The polyanionic compound may be a compound having a metal ion, a transition metal ion, and a tetrahedral (YO⁴)ⁿ⁻ anion unit. The metal ion may optionally be one of sodium ion, lithium ion, potassium ion, and zinc ion. The transition metal may optionally be at least one of Mn, Fe, Ni, Co, Cr, Cu, Ti, Zn, V, Zr, and Ce; and Y may optionally be at least one of P, S, and Si; where n represents a valence state of (YO⁴)ⁿ⁻.

The Prussian blue compound may be a compound with sodium ions, transition metal ions, and cyanide ions (CN-). The transition metal may be at least one of Mn, Fe, Ni, Co, Cr, Cu, Ti, Zn, V, Zr, and Ce. The Prussian blue compound is, for example, NaaMebMe'c(CN)₆, where Me and Me' are each independently at least one of Ni, Cu, Fe, Mn, Co, and Zn, 0<a≤2, 0<b<1, and 0<c<1.

The positive electrode active material layer may further include a conductive agent to improve the conductivity of the positive electrode. The conductive agent can be one or more of Super P, acetylene black, carbon black, Ketjen black, carbon dot, carbon nanotube, graphite, graphene, and carbon nanofiber.

The positive electrode active material layer may further include a binder to firmly bind a positive electrode active material and an optional conductive agent onto the positive electrode current collector. The binder may optionally be at least one of polyvinylidene fluoride (PVDF), polytetrafluoroethylene (PTFE), polyacrylic acid (PAA), polyvinyl alcohol (PVA), ethylene vinyl acetate (EVA), styrene-butadiene rubber (SBR), carboxymethyl cellulose (CMC), sodium alginate (SA), polymethacrylic acid (PMA), and carboxymethyl chitosan (CMCS).

The positive electrode current collector can be a conductive carbon sheet, metal foil, carbon-coated metal foil, porous metal plate, or composite current collector. Optionally, the conductive carbon material of the conductive carbon sheet can be one or more of Super P, carbon black, Ketjen black, carbon dots, carbon nanotubes, graphite, graphene, and carbon nanofibers; the metal materials of the metal foil, carbon-coated metal foil, and porous metal plate are each independently selected from at least one of copper, aluminum, nickel, and stainless steel; and the composite current collector can be a composite current collector formed by combining a polymer film and a metal foil.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Separator]

In some embodiments, the sodium secondary battery further includes a separator. The separator is not limited to any particular type in this application, and may be any well-known porous separator with good chemical stability and mechanical stability.

In some embodiments, a material of the separator can be selected from at least one of polyethylene, polypropylene, polyvinylidene fluoride, aramid fiber, polyethylene terephthalate, polytetrafluoroethylene, polyacrylonitrile, polyimide, polyamide, polyester, and natural fiber. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the sodium secondary battery may include an outer package. The outer package may be used for packaging the electrode assembly and the electrolyte.

In some embodiments, the outer package of the sodium secondary battery may be a hard shell, for example, a hard plastic shell, an aluminum shell, or a steel shell. The outer package of the sodium secondary battery may alternatively be a soft pack, for example, a soft pouch. Material of the soft pack may be plastic, which, for example, may be polypropylene, polybutylene terephthalate, and polybutylene succinate.

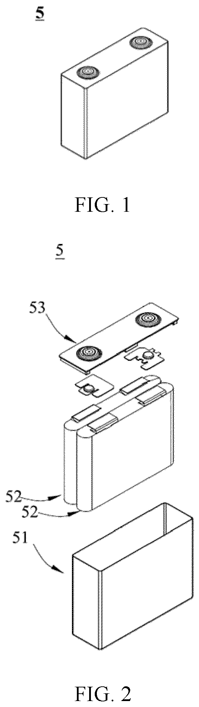

This application does not impose any special limitations on a shape of the sodium secondary battery, and the sodium secondary battery may be cylindrical, rectangular, or of any other shapes. For example, FIG. 1 shows a sodium secondary battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates into the electrode assembly 52. There may be one or more electrode assemblies 52 in the sodium secondary battery 5, and persons skilled in the art may make choices according to actual requirements.

In some embodiments, the sodium secondary battery may be assembled into a battery module, and the battery module may include one or more sodium secondary batteries. The specific quantity may be chosen by persons skilled in the art according to use and capacity of the battery module.

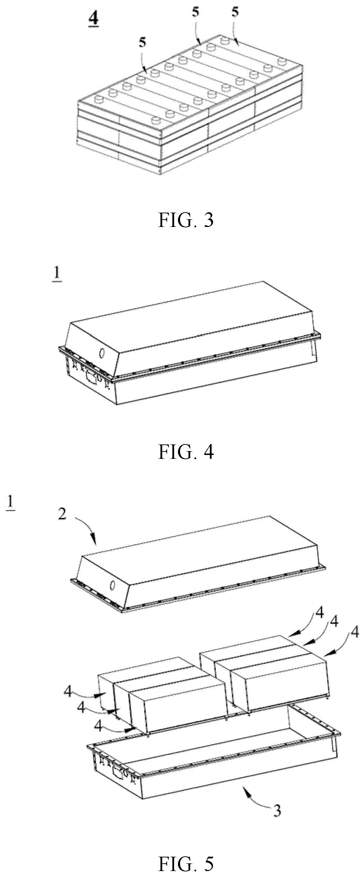

FIG. 3 shows a battery module 4 as an example. Referring to FIG. 3, in the battery module 4, a plurality of sodium secondary batteries 5 may be sequentially arranged in a length direction of the battery module 4. Certainly, the secondary batteries may alternatively be arranged in any other manners. Further, the plurality of sodium secondary batteries 5 may be fastened by using fasteners.

Optionally, the battery module 4 may further include an enclosure with an accommodating space, and the plurality of sodium secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric device, where the electric device includes at least one of the sodium secondary battery, the battery module, or the battery pack provided in this application. The sodium secondary battery, the battery module, or the battery pack may be used as a power source for the electric device or an energy storage unit of the electric device. The electric device may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The sodium secondary battery, battery module, or battery pack may be selected for the electric device based on requirements for using the electric device.

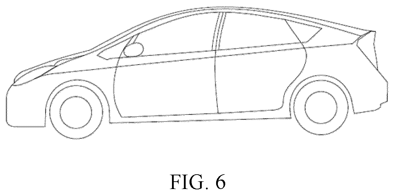

FIG. 6 shows an electric device as an example. This electric device is a battery electric vehicle, a hybrid electric vehicle, a plug-in hybrid electric vehicle, or the like. To satisfy a requirement for high power and high energy density of the sodium secondary battery of the electric device, a battery pack or a battery module may be used.

In another example, the apparatus may be a mobile phone, a tablet computer, a notebook computer, or the like. Such apparatus is generally required to be light and thin and may use a secondary sodium battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated. In the following embodiments, only a case in which the secondary battery is a sodium ion battery is shown, but this application is not limited thereto.

### I. Preparation method

### Example 1

### (1) Preparation of electrolyte

In an argon atmosphere glove box with a water content < 10 ppm, sodium hexafluorophosphate (NaPF₆) was dissolved in dimethoxyethane (DME) and stirred to uniformity to obtain a mixed solution. Then, methyltrimethoxysilane was mixed with the mixed solution to uniformity to obtain an electrolyte, where a volume ratio of methyltrimethoxysilane to dimethoxyethane was 1.5, and a mass percentage of sodium hexafluorophosphate, based on a total mass of the electrolyte, was 7%.

### (2) Preparation of positive electrode plate

A positive electrode active material Na₃V₂(PO₄)₃, a binder polyvinylidene fluoride (PVDF), and a conductive agent conductive carbon black (Super-P) were mixed in an N-methylpyrrolidone (NMP) solvent to uniformity at a mass ratio of 90%:6%:4% to prepare a positive electrode slurry. Using an extrusion coater, the positive electrode slurry was applied to a surface of aluminum foil according to the unit area mass requirements of the positive electrode active material, followed by drying. The coated electrode plate was then cold-pressed at a designed compacted density of 2.5 g/cm³ by using a cold presser to obtain the final positive electrode plate.

### (3) Preparation of negative electrode plate

Carbon nanotubes and sodium alginate were added to deionized water and stirred to form a uniform slurry. The slurry was applied to a negative electrode current collector, followed by drying and cutting to obtain a negative electrode plate with no negative electrode structure, where a surface density of the primer coating was 20 g/m².

### (4) Separator

A polyethylene film (PE separator) was used as the separator.

### (5) Preparation of battery

The positive electrode plate, the separator, and the negative electrode plate were stacked in sequence so that the separator was sandwiched between the positive electrode plate and the negative electrode plate for separation, and the electrolyte was added to assemble a button cell.

### Examples 2 - 27

Except for differences in the electrolyte formulation and/or the preparation parameters of the negative electrode plate, the other steps of Examples 2 to 27 were the same as the steps of Example 1. The methods for preparing the negative electrode plates in Examples 26 and 27 are as follows, with the specific parameters shown in Table 1.

Example 26: Carbon nanotubes and sodium alginate were added to deionized water and stirred to form a uniform slurry. The slurry was applied to the negative electrode current collector of aluminum foil, followed by drying and cutting to obtain a negative electrode current collector with a primer coating, where a surface density of the primer coating was 20 g/m². A negative electrode active material hard carbon, a conductive agent acetylene black, a binder styrene-butadiene rubber (SBCs), and a thickener carboxymethyl cellulose (CMC) were mixed at a weight ratio of 90:5:4:1 in an appropriate amount of deionized water and fully stirred to form a uniform negative electrode slurry. The negative electrode slurry was applied to the negative electrode current collector with the primer coating, followed by drying at 100°C and pressing to obtain the negative electrode plate.

Example 27: The negative electrode plate was aluminum foil. See Table 1 for the specific parameters.

### Comparative examples 1 - 3

Except for differences in the electrolyte formulation and/or the preparation parameters of the negative electrode plate, the other steps of Comparative Examples 1 to 3 were the same as the steps of Example 1. The method for preparing the negative electrode plate in Comparative Example 2 was the same as the method for preparing the negative electrode plate in Example 26, and the method for preparing the negative electrode plate in Comparative Example 3 was the same as the method for preparing the negative electrode plate in Example 27, with the specific parameters shown in Table 1.

### II. Battery performance test

### (1) Room-temperature cycling performance

At 25°C and normal pressure (0.1 MPa), the battery was charged at a constant current of 0.5C to a voltage of 3.5V, and then discharged at a constant current of 1C to a voltage of 3.2V. This was one charge and discharge cycle. The first discharge capacity was taken as 100%. The charge and discharge cycle was repeated 500 times, and then the test was stopped. The cycling capacity retention rate was recorded, and the room-temperature capacity retention rate was used as an indicator to evaluate the room-temperature cycling performance of the battery.

### (2) High-temperature cycling performance

At 60°C and normal pressure (0.1 MPa), the battery was charged at a constant current of 0.5C to a voltage of 3.5V, and then discharged at a constant current of 1C to a voltage of 3.2V. This was one charge and discharge cycle. The first discharge capacity was taken as 100%. The charge and discharge cycle was repeated 500 times, and then the test was stopped. The cycling capacity retention rate was recorded, and the high-temperature capacity retention rate was used as an indicator to evaluate the high-temperature cycling performance of the battery.

### (3) High-temperature gas generation performance

At room temperature (25°C), the battery was charged at a constant current of 0.5C to 3.5V. After the battery was fully charged, an initial volume of the battery was measured using a water displacement method. The battery was stored in an oven at 60°C for 24 days and then taken out. The battery was left standing at room temperature for 60 minutes. The volume of the battery was measured using the water displacement method within 60 minutes after the battery was cooled to room temperature. Using the battery volume measured before storage as the reference, the battery volume swelling rate was calculated. The volume swelling rate of the battery after 24 days of storage at 60°C (%) = (battery volume measured after storage/battery volume measured before storage) - 1.

The testing procedures of the comparative examples and other examples are the same as above.

### III. Test results

Test results of the examples and comparative examples are shown in Table 1.

**Table 1 Preparation parameters and test results of examples and comparative examples**

| No. | Sodium salt | | Diluent | Solvent | Volume ratio Y of the diluent to the solvent | Carbon coating surface density /(g/m²) | 5/(1*+* Y) | 50/(1*+* Y) | Battery performance | | |
|---|---|---|---|---|---|---|---|---|---|---|---|
| | Name | X | Name | Name | | | | | Room-temperature cycling capacity retention rate | High-temperature cycling capacity retention rate | High-temperature thickness swelling rate |
| Example 1 | NaPF₆ | 7 | Methyltrimethoxysilane | Dimethoxyethane | 1.5 | 20 | 2 | 20 | 91.12% | 86.21% | 0.31% |
| Example 2 | NaPF₆ | 7 | Trimethylmethoxysilane | Dimethoxyethane | 1.5 | 20 | 2 | 20 | 86.45% | 81.23% | 0.56% |
| Example 3 | NaPF₆ | 7 | Dimethyldimethoxysilane | Dimethoxyethane | 1.5 | 20 | 2 | 20 | 88.33% | 83.06% | 0.49% |
| Example 4 | NaPF₆ | 7 | Methyltriethoxysilane | Dimethoxyethane | 1.5 | 20 | 2 | 20 | 90.76% | 85.74% | 0.38% |
| Example 5 | NaPF₆ | 7 | Dimethyldiethoxysilane | Dimethoxyethane | 1.5 | 20 | 2 | 20 | 88.07% | 82.86% | 0.51% |
| Example 6 | NaPF₆ | 7 | Tetraethoxysilane | Dimethoxyethane | 1.5 | 20 | 2 | 20 | 90.19% | 85.89% | 0.36% |
| Example 7 | NaPF₆ | 7 | Methyltrimethoxysilane | Dimethoxyethane | 7 | 20 | 0.625 | 6.25 | 80.02% | 76.35% | 0.69% |
| Example 8 | NaPF₆ | 7 | Methyltrimethoxysilane | Dimethoxyethane | 5 | 20 | 0.833 | 8.33 | 85.77% | 78.73% | 0.56% |
| Example 9 | NaPF₆ | 7 | Methyltrimethoxysilane | Dimethoxyethane | 1 | 20 | 2.5 | 25 | 91.64% | 79.21% | 0.42% |
| Example 10 | NaPF₆ | 7 | Methyltrimethoxysilane | Dimethoxyethane | 0.5 | 20 | 3.33 | 33.3 | 92.02% | 75.32% | 0.78% |
| Example 11 | NaPF₆ | 7 | Methyltrimethoxysilane | Dimethoxyethane | 0.1 | 20 | 4.545 | 45.45 | 92.46% | 70.36% | 2.56% |
| Example 12 | NaPF₆ | 7 | Methyltrimethoxysilane | Diethylene glycol dimethyl ether | 1.5 | 20 | 2 | 20 | 90.87% | 85.36% | 0.35% |
| Example 13 | NaPF₆ | 7 | Methyltrimethoxysilane | Ethylene glycol diethyl ether | 1.5 | 20 | 2 | 20 | 91.06% | 85.80% | 0.35% |
| Example 14 | NaPF₆ | 7 | Methyltrimethoxysilane | Tetraethylene glycol dimethyl ether | 1.5 | 20 | 2 | 20 | 90.33% | 83.21% | 0.47% |
| Example 15 | NaOTf | 7 | Methyltrimethoxysilane | Dimethoxyethane | 1.5 | 20 | 2 | 20 | 90.03% | 84.09% | 0.42% |
| Example 16 | NaBF₄ | 7 | Methyltrimethoxysilane | Dimethoxyethane | 1.5 | 20 | 2 | 20 | 90.89% | 85.11% | 0.40% |
| Example 17 | NaPF₆ | 22 | Methyltrimethoxysilane | Dimethoxyethane | 1.5 | 20 | 2 | 20 | 75.03% | 69.13% | 0.92% |
| Example 18 | NaPF₆ | 20 | Methyltrimethoxysilane | Dimethoxyethane | 1.5 | 20 | 2 | 20 | 85.11% | 79.06% | 0.53% |
| Example 19 | NaPF₆ | 10 | Methyltrimethoxysilane | Dimethoxyethane | 1.5 | 20 | 2 | 20 | 90.70% | 85.38% | 0.32% |
| Example 20 | NaPF₆ | 2 | Methyltrimethoxysilane | Dimethoxyethane | 1.5 | 20 | 2 | 20 | 80.64% | 72.80% | 0.65% |
| Example 21 | NaPF₆ | 1 | Methyltrimethoxysilane | Dimethoxyethane | 1.5 | 20 | 2 | 20 | 50.07% | 0% | 0.89% |
| Example 22 | NaPF₆ | 7 | Methyltrimethoxysilane | Dimethoxyethane | 1.5 | 5 | 2 | 20 | 88.16% | 82.18% | 0.53% |
| Example 23 | NaPF₆ | 7 | Methyltrimethoxysilane | Dimethoxyethane | 1.5 | 50 | 2 | 20 | 89.03% | 82.46% | 0.56% |
| Example 24 | NaPF₆ | 7 | Methyltrimethoxysilane | Dimethoxyethane | 1.5 | 2 | 2 | 20 | 83.10% | 78.70% | 0.68% |
| Example 25 | NaPF₆ | 7 | Methyltrimethoxysilane | Dimethoxyethane | 1.5 | 60 | 2 | 20 | 82.36% | 76.80% | 0.72% |
| Example 26 | NaPF₆ | 7 | Methyltrimethoxysilane | Dimethoxyethane | 1.5 | 20+hard carbon negative electrode active layer | 2 | 20 | 90.77% | 83.17% | 0.51% |
| Example 27 | NaPF₆ | 7 | Methyltrimethoxysilane | Dimethoxyethane | 1.5 | / | 2 | 20 | 80.69% | 70.65% | 0.92% |
| Comparative Example 1 | NaPF₆ | 7 | / | Dimethoxyethane | / | 20 | / | / | 92.68% | 50.21% | 4.47% |
| Comparative Example 2 | NaPF₆ | 7 | / | Dimethoxyethane | / | 20+hard carbon negative electrode active layer | / | / | 91.78% | 46.23% | 5.11% |
| Comparative Example 3 | NaPF₆ | 7 | / | Dimethoxyethane | / | / | / | / | 84.03% | 36.21% | 6.53% |

According to the above results, the electrolytes for sodium secondary batteries in Examples 1 to 27 all include a diluent, where the diluent includes methyltrimethoxysilane, trimethylmethoxysilane, dimethyldimethoxysilane, methyltriethoxysilane, dimethyldiethoxysilane, or tetraethoxysilane. Comparing Examples 1 to 25 with Comparative Example 1, as well as Examples 26 and 27 with Comparative Examples 2 and 3, it can be seen that an electrolyte for a sodium secondary battery containing an alkyl alkoxy silane compound can reduce the high-temperature swelling rate of the battery, decrease the gas generation of the battery at high temperatures, and improve the safety of the battery.

The electrolytes in Examples 1 to 27 further include ether solvents such as dimethoxyethane, diethylene glycol dimethyl ether, ethylene glycol diethyl ether, or tetraethylene glycol dimethyl ether. These batteries exhibit excellent room-temperature cycling performance and high-temperature cycling performance, and low gas generation at high temperatures.

Comparing Examples 1, and 7 to 10 with Example 11, it can be seen that when a volume ratio Y of the methyltrimethoxysilane diluent to the dimethoxyethane solvent is 0.5 - 7, the high-temperature cycling performance of the battery can be enhanced, gas generation at high temperatures can be reduced, and the cycling performance and safety of the battery at high temperatures can be improved.

Comparing Examples 1, and 8 to 9 with Example 7, 9, and 11, it can be seen that when a volume ratio Y of the methyltrimethoxysilane diluent to the dimethoxyethane solvent is 1 - 5, the high-temperature cycling performance of the battery can be further enhanced, gas generation at high temperatures can be reduced, and the usable temperature range of the battery can be extended.

Comparing Examples 1 to 6, 8 to 16, 18 to 20, and 22 to 25 with Examples 7, 17, and 21, it can be seen that when the mass percentage X% of the sodium salt based on the total mass of the electrolyte and the volume ratio Y of the diluent to the solvent are controlled to satisfy 5/(1 + Y) ≤ X ≤ 50/(1 + Y), the room-temperature cycling performance of the battery can be improved, and the electrochemical performance of the battery can be enhanced.

Comparing Examples 1 and 26 with Example 27, it can be seen that when the negative electrode plate includes a negative electrode current collector and a primer coating formed on at least one side of the negative electrode current collector, the room-temperature cycling performance and high-temperature cycling performance of the battery can be improved, the high-temperature gas generation phenomenon of the battery can be alleviated, and the electrochemical performance and safety performance of the battery can be improved.

Comparing Examples 1, 22, and 23 with Examples 24 and 25, it can be seen that when the surface density of the primer coating is 5 g/m² - 50 g/m², the room-temperature cycling performance and high-temperature cycling performance of the battery can be improved, the high-temperature gas generation phenomenon of the battery can be alleviated, and the electrochemical performance and safety performance of the battery can be improved.

Comparing Example 1 with Example 26, it can be seen that when the sodium secondary battery is a sodium metal battery with no negative electrode, the room-temperature cycling performance and high-temperature cycling performance of the battery can be improved, the high-temperature gas generation phenomenon of the battery can be alleviated, and the electrochemical performance and safety performance of the battery can be improved.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. An electrolyte for a sodium secondary battery, **characterized in that** the electrolyte comprises a diluent, wherein the diluent comprises an alkyl alkoxy silane compound.

2. The electrolyte according to claim 1, **characterized in that** the diluent comprises one or more of compounds represented by formula I, formula II, formula III, or formula IV: 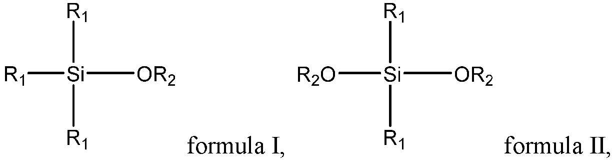 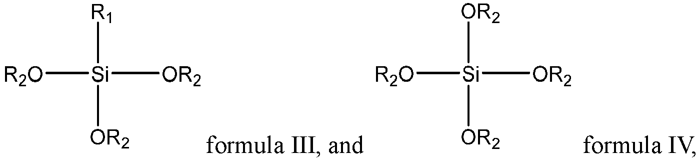 wherein
R₁ is selected from C₁-C₁₀ alkyl groups, and R₂ is selected from C₁-C₆ alkyl groups.

3. The electrolyte according to claim 1 or 2, **characterized in that** the diluent comprises one or more of methyltrimethoxysilane, dimethyldimethoxysilane, trimethylmethoxysilane, methyltriethoxysilane, dimethyldiethoxysilane, tetraethoxysilane, tetramethoxysilane, tetrapropoxysilane, ethyltrimethoxysilane, n-propyltrimethoxysilane, n-propyltriethoxysilane, isobutyltrimethoxysilane, isobutyltriethoxysilane, n-hexyltrimethoxysilane, n-hexyltriethoxysilane, n-octyltriethoxysilane, and n-decyltrimethoxysilane, optionally one or more of methyltrimethoxysilane, methyltriethoxysilane, and tetraethoxysilane.

4. The electrolyte according to any one of claims 1 to 3, **characterized in that** the electrolyte further comprises a solvent, wherein a volume ratio Y of the diluent to the solvent is in a range of 0.5 - 7, optionally 1 - 5.

5. The electrolyte according to claim 4, **characterized in that** the solvent comprises an ether solvent.

6. The electrolyte according to claim 4 or 5, **characterized in that** the solvent comprises one or more of dimethoxyethane, diethylene glycol dimethyl ether, ethylene glycol diethyl ether, triethylene glycol dimethyl ether, tetraethylene glycol dimethyl ether, and 1,3-dioxolane, optionally one or more of dimethoxyethane, diethylene glycol dimethyl ether, ethylene glycol diethyl ether, and tetraethylene glycol dimethyl ether.

7. The electrolyte according to any one of claims 4 to 6, **characterized in that** the electrolyte comprises a sodium salt,
and the electrolyte satisfies the following relationship: 5/(1 + Y) ≤ X ≤ 50/(1 + Y), wherein
X% is a mass percentage of the sodium salt based on a total mass of the electrolyte; and Y is the volume ratio of the diluent to the solvent.

8. The electrolyte according to claim 7, wherein the sodium salt comprises one or more of sodium perchlorate, sodium tetrafluoroborate, sodium hexafluorophosphate, sodium hexafluoroarsenate, sodium trifluoroacetate, sodium tetraphenylborate, sodium trifluoromethanesulfonate, sodium bis(fluorosulfonyl)imide, and sodium bis(trifluoromethylsulfonyl)imide.

9. A sodium secondary battery, **characterized in that** the sodium secondary battery comprises the electrolyte according to any one of claims 1 to 8.

10. The sodium secondary battery according to claim 9, **characterized in that** the secondary battery comprises a negative electrode plate, wherein the negative electrode plate comprises a negative electrode current collector and a primer coating formed on at least one side of the negative electrode current collector.

11. The sodium secondary battery according to claim 10, **characterized in that** a surface density of the primer coating is 5 g/m² - 50 g/m².

12. The sodium secondary battery according to claim 10 or 11, **characterized in that** the primer coating comprises one or more of carbon coating, alloy coating, and metal oxide coating, optionally carbon coating.

13. The sodium secondary battery according to any one of claims 10 to 12, **characterized in that** the primer coating contains one or more of super conductive carbon black, Ketjen black, acetylene black, carbon nanotubes, and graphene.

14. The sodium secondary battery according to any one of claims 9 to 13, **characterized in that** the sodium secondary battery is a sodium metal battery with no negative electrode.

15. An electric device, **characterized by** comprising the sodium secondary battery according to any one of claims 9 to 14.
